# EUROPÄISCHE PATENTSCHRIFT

(11) **EP 0 824 234 B1**
(45) Veröffentlichungstag und Bekanntmachung des Hinweises auf die Patenterteilung: **04.06.2003**
(21) Anmeldenummer: 97113412.7
(22) Anmeldetag: 04.08.1997
(51) Int. Cl.: G06F 1/18

(54) **Rechnergehäuse**
Computer housing
Boîtier d'ordinateur

(30) Priorität: 08.08.1996 DE 29613779 U
(43) Veröffentlichungstag der Anmeldung: 18.02.1998
(73) Patentinhaber: Fujitsu Siemens Computers GmbH, 81739 München (DE)
(72) Erfinder: Köhler, Friedrich, Dipl.-Ing., 86405 Meitingen (DE); Mysz, Dietmar, Dipl.-Ing., 86199 Augsburg (DE)
(74) Vertreter: Epping, Wilhelm, Dipl.-Ing.

(56) Entgegenhaltungen:
- WO-A-95/20785
- DE-U- 9 415 258
- US-A- 5 164 886

## Beschreibung

Die Erfindung betrifft ein Rechnergehäuse, bestehend aus einer Bodenwanne, einer Front- und Rückwand, einer zwischen Front- und Rückwand angeordneten Traverse zur Halterung von Baugruppen, einem haubenartigen Deckel und einer an der Frontwand lösbar befestigten Frontblende.

Bei derartigen Rechnergehäusen ist die Traverse üblicherweise mit Schrauben an der Front- und Rückwand befestigt. Diese Schraubverbindung erfordert nicht nur einen erheblichen Zeitaufwand bei der Montage, sie erweist sich auch dann als Nachteil, wenn zu Wartungszwecken auf unterhalb der Traverse liegende Baugruppen zugegriffen und aus diesem Grund die Traverse abgeschraubt und anschließend wieder angeschraubt werden muß.

Der vorliegenden Erfindung liegt deshalb die Aufgabe zugrunde, für die Befestigung einer in einem Rechnergehäuse zwischen Rück- und Frontwand angeordneten Traverse einen montagefreundlichen Weg aufzuzeigen.

Die Lösung dieser Aufgabe ergibt sich erfindungsgemäß durch die Merkmale des Anspruchs 1. Eine vorteilhafte Weiterbildung der Erfindung ist in Anspruch 2 angegeben.

Im folgenden wird ein Ausführungsbeispiel der Erfindung anhand der Zeichnung näher erläutert. Dabei zeigen
- Figur 1: einen Ausschnitt aus einem erfindungsgemäß aufgebauten Rechnergehäuse in perspektivischer Explosionsdarstellung und
- Figur 2: eine Schnittdarstellung für eine Traversen-Befestigung in einer Anordnung gemäß Figur 1.

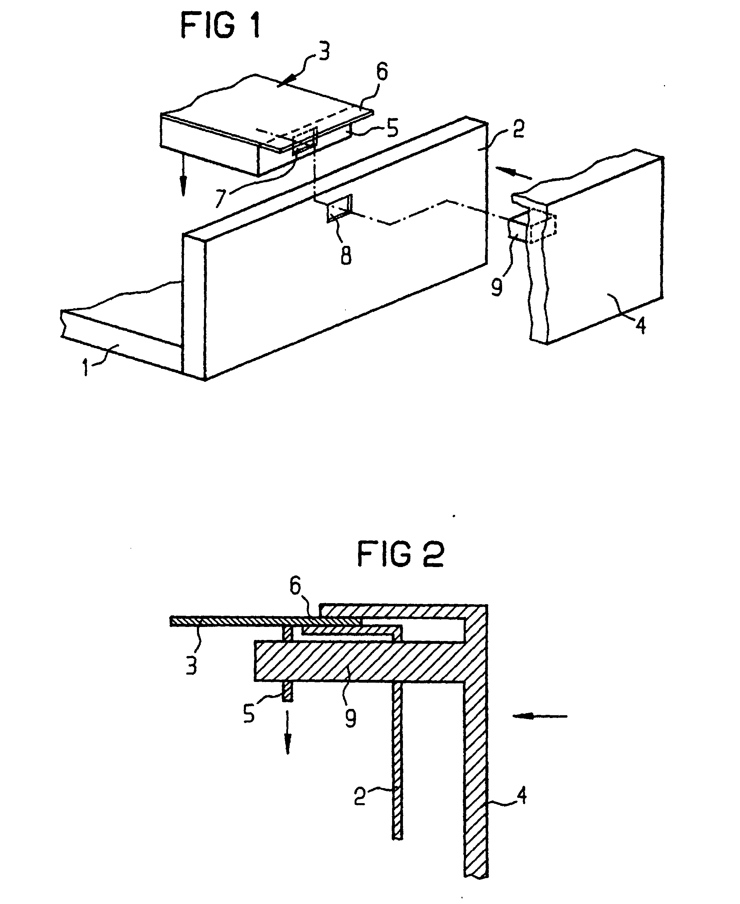

Die Figur 1 zeigt einen Ausschnitt aus einem wannenartig aufgebauten Gehäuseunterteil eines Rechnergehäuses mit einer Bodenplatte 1 und einer Frontwand 2. Zwischen Frontwand 2 und der in der Figur nicht dargestellten Rückwand ist eine in Höhe der oberen Begrenzung von Front- und Rückwand verlaufende Traverse 3 vorgesehen, die an der Rückwand mit Hilfe einer Haltelasche rastend befestigt ist. Am Gehäuse ist ferner eine die Frontwand 2 abdeckende Frontblende 4 angebracht. Das der Frontwand 2 zugewandte Ende der Traverse 3 weist einerseits eine parallel zur Frontwand 2 verlaufende Stirnfläche 5 auf und andererseits einen über die Stirnfläche 5 hinausreichenden Endflansch 6, der sich an der Oberkante der Frontwand 2 abstützt. Zur schraubenlosen Befestigung der Traverse 3 im Bereich der Frontwand 2 sind sowohl an der Stirnfläche 5 der Traverse 3, als auch in der Frontwand 2 zueinander fluchtende Durchbrechungen 7, 8 vorgesehen, die vorzugsweise einen rechteckigen Querschnitt aufweisen. Die Befestigung selbst erfolgt mit Hilfe eines an der Rückseite der Frontblende 4 vorhandenen Fixierdornes 9, der bei aufgeschobener Frontblende 4 die beiden Aussparungen 7, 8 durchdringt und auf diese Weise die Traverse 3 festhält. Zweckmäßig wird für die beiden Aussparungen 7, 8 und für den Fixierdorn 9 ein rechteckiger Querschnitt gewählt, weil dadurch auch eine exakte Ausrichtung der Frontblende 4 zur Frontwand 2 gewährleistet ist.

Das Prinzip der Traversenbefestigung wird anhand der in Figur 2 gezeigten Schnittdarstellung erkennbar. Diese Figur 2 zeigt den-oberen Bereich der Frontwand 2, den der Frontwand 2 zugewandten Endbereich der Traverse 3 und die Frontblende 4. Der Endbereich der Traverse 3 besteht einerseits aus der parallel zur Frontwand 2 verlaufenden Stirnfläche 5 und andererseits aus dem Endflansch 6, der sich an der Oberkante der Frontwand 2 abstützt. Bei aufgesetzter Traverse 3 verlaufen die jeweils in der Stirnfläche 5 und in der Frontwand 2 vorgesehenen Durchbrechungen fluchtend zueinander. Der an der Innenseite der Frontwand 6 vorgesehene Fixierdorn 9 taucht bei aufgeschobener Frontblende 6 in die beiden Durchbrechungen ein und bewirkt auf diese Weise die gewünschte Befestigung der Traverse 3 am Gehäuse.

## Patentansprüche

1. Rechnergehäuse, bestehend aus einer Bodenwanne, einer Front- und Rückwand, einer zwischen Front- und Rückwand angeordneten Traverse zur Halterung von Baugruppen, einem haubenartigen Deckel und einer an der Frontwand lösbar befestigten Frontblende,
**dadurch gekennzeichnet,**
**daß** die mit einem Ende an der Rückwand rastend befestigte Traverse (3) am anderen Ende in unmittelbarer Nähe der Frontwand (2) eine parallel zur Frontwand verlaufende Stirnfläche (5) aufweist, daß sich die Traverse mit einem über die Stirnfläche (5) hinausreichenden Endflansch (6) an der Oberkante der Frontwand (2) abstützt, daß in der Stirnfläche (5) und in der Frontwand (2) jeweils zueinander fluchtende Durchbrechungen (7,8) vorgesehen sind, und daß an der Rückseite der Frontblende (4) ein fluchtend zu den beiden Durchbrechungen (7,8) verlaufender Fixierdorn (9) vorgesehen ist.

2. Rechnergehäuse nach Anspruch 1,
**dadurch gekennzeichnet,**
**daß** die Durchbrechungen (7,8) und der Fixierdorn (9) einen jeweils rechteckigen Querschnitt aufweisen.

## Claims

1. Computer housing comprising a base tray, a front wall and rear wall, a crossmember which is arranged between the front wall and rear wall and is intended for securing subassemblies, a shroud-like cover and a front panel, which is fastened releasably on the front wall, **characterized in that** the crossmember (3), which is fastened with latching action on the rear wall by one end, has at the other end, in the immediate vicinity of the front wall (2), an end surface (5) running parallel to the front wall, **in that** the crossmember is supported on the top edge of the front wall (2) by way of an end flange (6) which extends beyond the end surface (5), **in that** respectively aligned through-passages (7, 8) are provided in the end surface (5) and in the front wall (2), and **in that** a fixing projection (9), which is aligned with the two through-passages (7, 8), is provided on the rear side of the front panel (4).

2. Computer housing according to Claim 1, **characterized in that** the through-passages (7, 8) and the fixing projection (9) each have a rectangular cross section.

## Revendications

1. Boîtier d'ordinateur se composant d'une cuve de fond, d'une paroi avant et d'une paroi arrière, d'une traverse disposée entre la paroi avant et la paroi arrière en vue de supporter des modules, d'un couvercle en forme de capot et d'un panneau avant fixé de façon amovible à la paroi avant,
**caractérisé en ce que**
la traverse (3), dont une extrémité est fixée par encliquetage à la paroi arrière, présente à l'autre extrémité à proximité immédiate de la paroi avant (2) une face frontale (5) s'étendant parallèlement à la paroi avant,
la traverse s'appuie sur le bord supérieur de la paroi avant (2) au moyen d'un rebord d'extrémité (6) saillant au-dessus de la face frontale (5),
des passages traversants (7, 8), alignés l'un avec l'autre, sont ménagés respectivement dans la face frontale (5) et dans la paroi avant (2), et
un tenon de fixation (9), aligné avec les deux passages traversants (7, 8), est prévu sur la face arrière du panneau avant (4).

2. Boîtier d'ordinateur selon la revendication 1, caractérisé dans ce que les passages traversants (7, 8) et le tenon de fixation (1 ) ont tous une section rectangulaire.
